# FASCICULE DE BREVET EUROPEEN

(11) **EP 2 456 670 B1**
(45) Date de publication et mention de la délivrance du brevet: **11.09.2019**
(21) Numéro de dépôt: 10745365.6
(22) Date de dépôt: 29.06.2010
(51) Int. Cl.: B64D 41/00, F01D 15/10, F02N 11/04, B64D 29/06

(54) **CIRCUIT D'ALIMENTATION ÉLECTRIQUE POUR NACELLE DE TURBORÉACTEUR**
ELEKTRISCHE ENERGIEVERTEILUNG FÜR EINE TRIEBWERKSGONDEL EINES STRAHLTRIEBWERKES
ELECTRICAL POWER SUPPLY CIRCUIT FOR A TURBOFAN NACELLE

(30) Priorité: 24.07.2009 FR 0903662
(43) Date de publication de la demande: 30.05.2012
(73) Titulaire: Safran Nacelles, 76700 Gonfreville-l'Orcher (FR)
(72) Inventeur: PEREIRA, David, F-91470 Limours (FR); MAALIOUNE, Hakim, F-78630 Orgeval (FR); LE COQ, Vincent, F-76430 St Romain de Colbosc (FR)
(74) Mandataire: Delorme, Nicolas
(86) Numéro de dépôt international: PCT/FR2010/051352
(87) Numéro de publication internationale: WO 2011/010033

(56) Documents cités:
- EP-A1- 1 852 953
- DE-A1-102007 057 536
- FR-A1- 2 911 847

## Description

La présente invention se rapporte à un système d'alimentation électrique pour nacelle de turboréacteur.

Un avion est propulsé par plusieurs turboréacteurs logés chacun dans une nacelle abritant également un ensemble de dispositifs complémentaires liés à son fonctionnement tel qu'un dispositif d'inversion de poussée et un système de dégivrage par exemple.

Le rôle d'un inverseur de poussée lors de l'atterrissage d'un avion est d'améliorer sa capacité de freinage en redirigeant vers l'avant au moins une partie de la poussée générée par le turboréacteur.

Dans cette phase, l'inverseur obstrue la tuyère d'éjection des gaz et dirige le flux d'éjection du moteur vers l'avant de la nacelle générant de ce fait une contre poussée qui vient s'ajouter au freinage des roues de l'avion.

Les moyens mis en oeuvre pour réaliser cette réorientation du flux varient selon le type d'inverseur. Cependant, dans tous les cas, la structure d'un inverseur comprend des capots mobiles déplaçables entre d'une part une position déployée dans laquelle ils ouvrent dans la nacelle un passage destiné aux flux déviés, et d'autre part une position d'escamotage dans laquelle ils ferment ce passage.

Ces capots mobiles peuvent remplir eux-mêmes la fonction de déviation ou plus simplement une fonction d'activation d'autres moyens de déviation tels que des volets d'obstruction de la veine.

De manière générale, les capots mobiles et moyens de déviation sont actionnés par des vérins hydrauliques ou pneumatiques qui nécessitent un réseau de transport d'un fluide sous pression. Ce fluide sous pression peut être obtenu par piquage d'air sur le turboréacteur dans le cas d'un système pneumatique ou prélèvement sur le circuit hydraulique de l'avion dans le cas d'un système hydraulique.

De tels systèmes requièrent une maintenance importante car la moindre fuite dans le réseau hydraulique ou pneumatique peut avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier ces divers inconvénients liés aux systèmes pneumatique et hydraulique, les constructeurs d'inverseurs de poussée ont cherché à les remplacer et à équiper au maximum leurs inverseurs d'actionneurs électromécaniques plus légers et plus fiables. Un tel inverseur est décrit dans le document EP 0 843 089.

D'autres demandes de brevet visent plus particulièrement les systèmes de contrôle de ces inverseurs électriques.

Un autre équipement important d'une nacelle de turboréacteur est le système de dégivrage et/ou d'antigivrage pour bords d'attaque et plus particulièrement pour la lèvre d'entrée d'air du moteur de l'aéronef.

En effet, la formation de givre sur la lèvre d'entrée d'air pose de nombreux problèmes parmi lesquels l'ajout de poids, le déséquilibre qui s'ensuit entre les parties bâbord et tribord et dans le cas plus particulier des entrées d'air de turboréacteur, la formation de blocs de glace susceptibles de pénétrer dans le moteur et d'endommager les pâles de sa soufflante notamment.

Parmi les systèmes de dégivrage de la technique antérieure, on connaît des systèmes pneumatiques consistant à prélever de l'air chaud au niveau du turboréacteur et à l'amener à l'intérieur de la lèvre d'entrée d'air au moyen d'un circuit de conduites approprié.

Ces systèmes pneumatiques sont encombrants, pesants et dégradent le rendement des moteurs de l'aéronef.

Par conséquent, comme pour le système d'inversion de poussée, les constructeurs aéronautiques ont cherché à recourir à des systèmes de dégivrage électrique utilisant un réseau de résistances électriques chauffantes à travers lesquels circule un courant électrique.

De plus nombreux documents de brevets visent ces systèmes. On peut notamment citer la demande FR 08/06416 ou FR 09/00364 non encore publiées.

Un aspect important de ces nacelles de turboréacteur utilisant des systèmes électriques est la gestion de l'alimentation électrique de ces différents systèmes.

Le document EP 1 852 953 décrit un circuit d'alimentation pour équipements électriques de moteur d'aéronef et/ou de son environnement.

Le document EP 1 953 085 traite de cette question et concerne un circuit d'alimentation pour système de dégivrage électrique.

Selon le document EP 1 953 085, le système de dégivrage est alimenté par l'intermédiaire d'un générateur électrique dédié distinct des générateurs permettant l'alimentation électrique de l'avion à laquelle sera notamment raccordé le dispositif d'inversion de poussée. Ce générateur dédié est plus particulièrement monté sur la boite d'accessoires, dite AGB (Accessory Gear Box), du turboréacteur.

Ce générateur dédié délivre une tension électrique régulée aux résistances chauffantes du dispositif de dégivrage de l'entrée d'air.

La solution décrite dans le document EP 1 953 085 a permis de s'affranchir d'un convertisseur de puissance pour améliorer la fiabilité du système et d'éviter d'apporter de l'énergie électrique de forte puissance en retour depuis le coeur électrique de l'avion jusqu'au moteur.

Le système d'activation électrique de l'inverseur de poussée reste quant à lui alimenté par le coeur électrique de l'avion. Ce système consiste généralement à convertir l'énergie électrique provenant du coeur avion en pilotant un moteur relié à un mécanisme de transmission flexible entraînant des actionneurs électromécaniques.

Bien que permettant une gestion autonome de l'alimentation électrique du dispositif de dégivrage et permettant d'éviter la présence d'éléments électriques supplémentaires à bord de la nacelle, le système décrit dans le document EP 1 953 085 présente certaines limitations.

En effet, dans ce dispositif, le système électrique de l'inverseur de poussée reste relié au coeur électrique de l'avion. Il convertit l'énergie électrique de l'avion en tension alternative notamment par des ponts redresseurs et des capacités en réseau de type HVDC.

Le système comprend également un ensemble d'onduleurs et régule les courants de phases à un ou plusieurs moteurs, par exemples de types brushless, aptes à entraîner les actionneurs électromécaniques du dispositif d'inverseur de poussée.

Ces convertisseurs de forte puissance restent encombrants, alourdissent le système électrique global de la nacelle notamment car leur densité de puissance de quelques kW/Kg est limitée par les températures de jonction des substrats silicium pour les transistors actifs tels que les IGBT (Transistors bipolaires à grille isolée).

Par ailleurs, on notera que le freinage électrodynamique des actionneurs s'effectue par dissipation de l'énergie générée dans les moteurs à travers une résistance de dissipation en pilotant un transistor de commande correspondant, ceci afin d'éviter de perturber le réseau électrique avion en y réinjectant de l'énergie électrique.

Au bilan global, les inconvénients majeurs pour la gestion de l'énergie sont principalement :
- la nécessité d'apporter de l'énergie électrique avion au système en retour, l'énergie électrique avion étant elle-même produite depuis des générateurs électriques montés sur les boites d'accessoires du moteur AGB,
- la nécessité de convertir et réguler la source électrique de courant alternatif,
- la nécessité de dissiper de l'énergie dans les modes de freinage électrodynamiques de l'inverseur (dissipation dans une résistance de freinage) afin de ne pas perturber la qualité du réseau électrique de l'avion en y réinjectant l'énergie de freinage.

Ceci impose de nombreuses contraintes sur le dimensionnement du système en volume, poids et prix, notamment.

La présente invention vise à palier ces inconvénients et consiste pour ce faire en un système pour nacelle de turboréacteur selon la revendication 1.

Par directement on entend sans passer par le réseau avion c'est-à-dire que le générateur électrique n'alimente pas le réseau électrique de l'avion sur lequel serait ensuite prélevé l'énergie électrique pour alimenter le premier et deuxième dispositif électrique actif mais que l'alimentation est effectuée directement au sein de la nacelle par ce générateur dédié. Cela n'empêche pas une transition de l'alimentation électrique par différents organes, tels que redresseurs, transistors ou autres mais reste interne à la nacelle.

L'expression dispositif électrique de puissance autre qu'une simple unité de contrôle et de surveillance, n'empêche pas que le dispositif électrique contienne une unité de contrôle ou de surveillance propre pour la gestion de ces composants actifs tels que les résistances chauffantes et/ou moteurs électriques. Ainsi, de tels dispositifs comprennent notamment un dispositif d'inversion de poussée, un dispositif de dégivrage électrique, un dispositif de tuyère variable, mais exclu un simple boîtier de contrôle ou de monitoring seul.

Ainsi, en utilisant un même générateur autonome pour alimenter plusieurs équipements électriques de puissance de la nacelle, il n'est plus nécessaire de prélever de l'énergie au réseau électrique de l'avion ni de le corriger et redresser. Il s'ensuit une simplification du circuit, une réduction des composants et par voie de conséquence un allégement de la structure.

De manière préférentielle, l'un des dispositifs électriques de puissance est un dispositif de dégivrage électrique.

Globalement, la mutualisation de la source électrique entre un dispositif électrique du type dégivrage et un dispositif électrique du type inversion de poussée est permise par le fait qu'une interruption de quelques secondes du dispositif de dégivrage peut être admise. Durant cette interruption, le générateur est alors utilisé pour alimenter le dispositif d'inversion de poussée, dont le temps d'ouverture et d'escamotage est de quelques secondes.

Le niveau de puissance prélevée et dissipée en freinage électrodynamique, est également plus faible que le niveau maximal de puissance de dégivrage. Le dimensionnement du générateur pour le système de dégivrage convient donc généralement également au dispositif d'inversion de poussée.

Dans le cas d'un système d'inversion à un seul moteur électrique, on pourra imaginer, plutôt que d'utiliser des convertisseurs AC-AC ou AC-DC et DC-AC de piloter directement le générateur et alimenter sans convertisseur le moteur électrique du dispositif d'inversion de poussée, par exemple de type à courant continu.

De manière avantageuse, l'un des dispositifs électriques de puissance est un dispositif de tuyère variable.

Selon une variante de réalisation, le générateur électrique est de type générateur / starter.

Avantageusement, le générateur électrique en mode starter est apte à être alimenté par une ligne retour d'un des dispositifs électriques.

En effet, la réjection de l'énergie en mode freinage peut se faire soit, si le dimensionnement le permet, dans l'arbre de la génératrice (fonctionnement en starter), soit pour alimenter l'autre dispositif électrique, en l'espèce plus particulièrement le dispositif de dégivrage. La réjection de l'énergie peut être mixte, ce qui permet de contrôler la vitesse de freinage.

De manière préférentielle, le générateur est situé au niveau d'une boite accessoire du turboréacteur.

De manière préférentielle, le circuit d'alimentation électrique comprend au moins deux générateurs électriques, notamment pour raisons de sécurité.

Selon une variante de réalisation, au moins un des dispositifs de puissance fonctionne en courant continu, notamment grâce à au moins un moteur à courant continu.

De manière préférentielle, au moins un dispositif électrique est associé à un convertisseur, notamment de type AC-AC quand ledit dispositif de puissance fonctionne en courant continu. Il pourra notamment s'agir du dispositif d'inversion de poussée avec un moteur électrique à courant continu.

Avantageusement, le convertisseur permet le pilotage du dispositif électrique associé, notamment par régulation de l'alimentation du dispositif, notamment par l'intermédiaire d'une unité de contrôle nacelle et / ou de contrôle avion.

Avantageusement encore, le générateur est piloté par au moins une unité de contrôle électrique de la nacelle. Le pilotage du générateur peut notamment être utilisé pour piloter directement le ou les dispositifs électriques associés.

De manière complémentaire, le générateur est piloté par au moins une unité de contrôle électrique de la nacelle. Une telle unité est généralement connue sous le sigle ENU : Electrical Nacelle Unit.

Avantageusement, le générateur électrique est apte à être piloté à l'aide de signaux de surveillance en provenance des premier et / ou deuxième dispositifs électriques alimentés, notamment par le biais de l'unité de contrôle de la nacelle.

De manière préférentielle, le circuit comporte au moins un commutateur électrique apte à être commandé par une unité de contrôle, notamment une unité de contrôle avion.

Avantageusement, avec la solution de l'invention, il n'y a plus de convertisseur principal de puissance, ni de prélèvement de source électrique de puissance sur le réseau avion, mais uniquement un ensemble de commutateurs qui permettent de diriger la tension de la génératrice vers l'un ou / et l'autre dispositif électrique commandé.

Un autre mode de réalisation peut être proposé dans le cas où le temps de réponse de la régulation de tension de la génératrice est trop important et devient incompatible avec les besoins de régulation dynamique du dispositif électrique alimenté. Dans ce cas, on pourra alors mettre en place une régulation primaire de la tension de la génératrice effectuée par une unité de contrôle nacelle et prévoir un convertisseur de tension secondaire, également contrôlé par l'unité de contrôle nacelle, et utilisé pour affiner au besoin la régulation de l'alimentation du dispositif électrique et assurer la stabilité de la boucle de commande.

Avantageusement, chaque dispositif électrique alimenté par le générateur est associé à un commutateur pilotable.

Dans le cas précédent où un convertisseur secondaire est utilisé, le convertisseur secondaire peut être, par exemple, du type AC-AC et peut remplacer le commutateur d'alimentation du dispositif électrique.

De manière préférentielle, au moins un dispositif électrique alimenté comprend au moins une ligne de commande en provenance d'une unité de contrôle avion.

En effet, l'aspect pilotage de ces dispositifs restent généralement du ressort du poste de pilotage, et sont donc commandés par une unité de contrôle avion et par un calculateur moteur, seule la puissance électrique étant fournie et gérée par la nacelle conformément à l'invention.

La présente invention se rapporte également à une nacelle de turboréacteur comprenant au moins un circuit d'alimentation électrique selon l'invention.

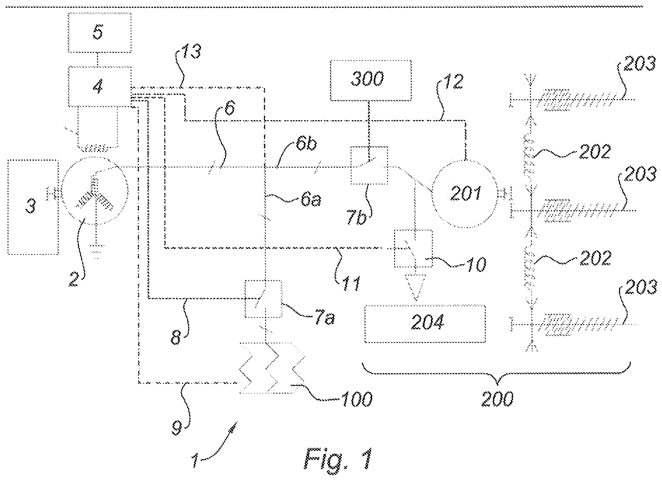

La présente invention sera mieux comprise à l'aide de la description détaillée qui suit en regard du dessin annexé dans lequel la figure unique est une représentation schématique d'un circuit d'alimentation électrique selon l'invention.

Avant de décrire en particulier le mode de réalisation représenté sur la figure unique, il est important de préciser que le circuit décrit n'est pas limité à un type de dispositif électrique particulier, ni notamment à un dispositif particulier de dégivrage ou un dispositif particulier d'inverseur de poussée, la présente invention s'occupant de l'alimentation électrique de ces système.

L'agencement et les spécificités de ces systèmes sont connus de l'homme du métier et ne font pas l'objet de la présente demande.

Le circuit électrique 1 du système pour nacelle de turboréacteur selon l'invention tel que représenté sur la figure unique vise à alimenter, d'une part, un dispositif de dégivrage électrique 100, et d'autre part, un dispositif d'inversion de poussée 200 comprenant un moteur électrique 201 apte à entraîner mécaniquement un ensemble d'arbres flexibles 202 actionneur un ensemble d'actionneurs électromécaniques 203 de l'inverseur de poussée.

Le dispositif d'inversion de poussée comprend également un ensemble de verrous 204, notamment dits primaire et tertiaires.

Pour une description plus précise d'un système d'inversion de poussée électrique, on pourra se référer au document EP 0 843 089.

Conformément à l'invention, le circuit électrique 1 comprend un générateur / starter 2 lié mécaniquement à un arbre du turboréacteur qui l'entraîne en rotation pour générer de l'électricité.

Ce générateur est situé au niveau d'une boîte d'accessoires 3 (AGB) de la nacelle.

Un ou deux autres générateurs distincts (non représentés) sont chargés de fournir l'électricité du réseau électrique avion.

Le générateur 2 alimente en électricité et est piloté par une unité de contrôle nacelle 4 nommée ENU pour « Electrical Nacelle Unit », elle-même pilotée par un contrôleur moteur 5 nomé EEC pour « Engine Electrical Controller ». L'ENU étant une unité de contrôle et non de puissance, elle n'est pas considérée comme un dispositif électrique actif selon l'invention.

Le générateur 2 alimente directement par sa sortie 6 électrique, d'une part, le dispositif de dégivrage 100 par une ligne d'alimentation 6a, et d'autre part, le dispositif d'inversion de poussée par une ligne 6b.

Afin d'orienter au choix l'alimentation électrique du générateur 2 soit vers le dispositif de dégivrage 100 soit vers le dispositif d'inversion de poussée 200, chacune des lignes 6a, 6b est équipée d'un commutateur 7a, 7b apte à permettre ou interrompre l'alimentation sur la ligne considérée.

La gestion du dispositif de dégivrage étant autonome et relevant généralement de la nacelle, le commutateur 7a est commandé par une ligne 8 provenant de l'ENU 4. Une ligne retour 9, typiquement pour les informations issues de capteurs de température, permet le retour d'informations à l'ENU 4.

L'alimentation 6b à destination de l'inverseur de poussée bénéficie quant à elle d'un double contrôle.

Le commutateur principal 7b est piloté par une unité de contrôle moteur 300, nommée EIU pour « Engin Interface Unit ».

L'alimentation 7b alimente directement le moteur 201 et peut alimenter l'ensemble de verrous 204 sous réserve de la fermeture d'un commutateur 10 commandé par une ligne de commande 11 en provenance de l'ENU 4, pour des raisons de sécurité (ségrégation des ordres).

Une ligne de retour 12, typiquement pour les informations issues de capteurs de position de l'inverseur, permet le retour d'informations à l'ENU 4.

On notera également que la ligne d'alimentation 6, peut être équipée d'un capteur de courant retournant l'information à l'ENU 4 par une ligne 13.

Conformément à l'invention, le générateur 2 alimente donc en électricité directement un premier dispositif électrique, en l'occurrence le système de dégivrage 100, et un deuxième dispositif électrique, en l'occurrence, le dispositif d'inversion de poussée 200.

Les aspects de pilotage et de contrôle de chaque dispositif restent bien évidemment du ressort direct, indirect ou complémentaire de contrôleurs avion / nacelle, etc. Un aspect principal de l'invention est que la gestion de la puissance électrique nacelle est autonome et correctement dimensionnée sans avoir à prélever de la puissance électrique sur le réseau avion, puissance qu'il faudrait redresser et adapter.

En fonction des dispositifs alimentés et de la puissance nécessaire, la puissance électrique peut être orientée vers l'un ou l'autre ou les deux dispositifs.

Dans le cas d'un dispositif de dégivrage et d'un dispositif d'inversion de poussée, il est possible de suspendre le dégivrage pendant les quelques secondes de fonctionnement de l'inverseur, ce qui permet de dimensionner le générateur 2 uniquement selon la puissance maximale requise entre les deux dispositifs.

Une variante non représentée mais revendiquée consiste à prévoir un retour électrique depuis le moteur 201 de l'inverseur de poussée, vers le générateur 2 en mode starter.

En effet, lors de l'ouverture ou de la fermeture de l'inverseur de poussée, le moteur 201 peut être utilisé pour freiner électrodynamiquement les actionneurs 203. Le moteur 203 produit donc de l'électricité qui peut servir pour alimenter le dispositif de dégivrage 100, ou être retournée au générateur 2 en mode starter et sur l'arbre du turboréacteur.

Bien évidemment, pour certains dispositifs électriques ou certaines configurations de ces dispositifs, il peut être nécessaire d'avoir une alimentation électrique d'appoint ou d'avoir des servitudes secondaires qui peuvent toujours nécessiter une amenée de courant depuis l'avion. La puissance prélevée sera toutefois accessoire et non plus principale.

Une servitude complémentaire non représentée consiste à employer une source électrique accessoire de l'avion pour les opérations de maintenance au sol, c'est-à-dire quand le turboréacteur est arrêté et que la génératrice ne produit donc pas de courant. Dans ce cas, ce circuit de tension régulée est, par exemple, converti pour alimenter progressivement les récepteurs.

On notera également que les dispositifs électriques alimentés de manière autonome peuvent comprendre, par exemple, un dispositif de tuyère variable, ...

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention tel que défini par les revendications.

## Revendications

1. Système pour nacelle de turboréacteur, comprenant un circuit d'alimentation (1) électrique, un premier dispositif électrique de puissance autre qu'une unité de contrôle ou de surveillance et au moins un deuxième dispositif électrique de puissance autre qu'une unité de contrôle ou de surveillance, le circuit d'alimentation (1) électrique comprenant au moins un générateur électrique (2) lié mécaniquement à un arbre du turboréacteur, ledit générateur alimentant électriquement et directement le premier dispositif électrique de puissance et ledit générateur alimentant électriquement directement l'au moins un deuxième dispositif électrique de puissance, et l'un des dispositifs électriques de puissance étant un dispositif d'inversion de poussée (200), **caractérisé en ce que** le dispositif d'inversion de poussée (200) comprend une ligne de sortie de freinage électrodynamique apte à alimenter au moins partiellement un autre dispositif électrique.

2. Système selon la revendication 1, **caractérisé en ce que** l'un des dispositifs électriques de puissance est un dispositif de dégivrage électrique (100).

3. Système selon la revendication 1 ou 2, **caractérisé en ce que** l'un des dispositifs électriques de puissance est un dispositif de tuyère variable.

4. Système selon l'une quelconque des revendications 1 à 3, **caractérisé en ce que** le générateur électrique (2) est de type générateur / starter.

5. Système selon la revendication 4, **caractérisé en ce que** le générateur électrique (2) en mode starter est apte à être alimenté par une ligne retour d'un des dispositifs électriques.

6. Système selon l'une quelconque des revendications 1 à 5, **caractérisé en ce que** le générateur (2) est situé au niveau d'une boite accessoire (3) du turboréacteur.

7. Système selon l'une quelconque des revendications 1 à 6, **caractérisé en ce que** le circuit d'alimentation (1) électrique comprend au moins deux générateurs électriques (2), notamment pour raisons de sécurité.

8. Système selon l'une quelconques des revendications 1 à 7, **caractérisé en ce qu'**au moins un des dispositifs de puissance (200) fonctionne en courant continu, notamment grâce à au moins un moteur (201) à courant continu.

9. Système selon l'une quelconque des revendications 1 à 8, **caractérisé en ce qu'**au moins un dispositif électrique est associé à un convertisseur, notamment de type AC-AC

10. Système selon la revendication 9, **caractérisé en ce que** le convertisseur permet le pilotage du dispositif électrique associé, notamment par régulation de l'alimentation du dispositif, notamment par l'intermédiaire d'une unité de contrôle nacelle (4) et / ou de contrôle avion (5).

11. Système selon l'une quelconque des revendications 1 à 10 **caractérisé en ce que** le générateur (2) est piloté par au moins une unité de contrôle électrique de la nacelle (4).

12. Système selon l'une quelconque des revendications 1 à 11, **caractérisé en ce que** le générateur électrique (2) est apte à être piloté à l'aide de signaux de surveillance (12, 9) en provenance des dispositifs électriques alimentés, notamment par l'intermédiaire de l'unité de contrôle de la nacelle (4).

13. Système selon l'une quelconque des revendications 1 à 12, **caractérisé en ce que** le circuit d'alimentation (1) électrique comporte au moins un commutateur électrique (7a, 7b) apte à être commandé par une unité de contrôle (300, 4), notamment une unité de contrôle avion.

## Patentansprüche

1. System für eine Triebwerksgondel, das eine elektrische Versorgungsschaltung (1), eine erste elektrische Leistungsvorrichtung, die keine Steuerungs- oder Überwachungseinheit ist, und mindestens eine zweite elektrische Leistungsvorrichtung umfasst, die keine Steuerungs- oder Überwachungseinheit ist, wobei die elektrische Versorgungsschaltung (1) mindestens einen elektrischen Generator (2) umfasst, der mechanisch mit einer Welle des Triebwerks verbunden ist, wobei der Generator die erste elektrische Leistungsvorrichtung elektrisch und direkt versorgt, und wobei der Generator die mindestens eine zweite elektrische Leistungsvorrichtung elektrisch und direkt versorgt, und wobei eine der elektrischen Leistungsvorrichtungen eine Schubumkehrvorrichtung (200) ist, **dadurch gekennzeichnet, dass** die Schubumkehrvorrichtung (200) eine Ausgangsleitung für eine elektrodynamische Bremse umfasst, die eine weitere elektrische Vorrichtung mindestens teilweise versorgen kann.

2. System nach Anspruch 1, **dadurch gekennzeichnet, dass** eine der elektrischen Leistungsvorrichtungen eine elektrische Enteisungsvorrichtung (100) ist.

3. System nach Anspruch 1 oder 2, **dadurch gekennzeichnet, dass** eine der elektrischen Leistungsvorrichtungen eine variable Düsenvorrichtung ist.

4. System nach einem der Ansprüche 1 bis 3, **dadurch gekennzeichnet, dass** der elektrische Generator (2) vom Typ Starter-Generator ist.

5. System nach Anspruch 4, **dadurch gekennzeichnet, dass** der elektrische Generator (2) im Startermodus über eine Rückleitung einer der elektrischen Vorrichtungen versorgt werden kann.

6. System nach einem der Ansprüche 1 bis 5, **dadurch gekennzeichnet, dass** sich der Generator (2) im Bereich eines Zubehörkastens (3) des Triebwerks befindet.

7. System nach einem der Ansprüche 1 bis 6, **dadurch gekennzeichnet, dass** die elektrische Versorgungsschaltung (1) insbesondere aus Sicherheitsgründen mindestens zwei elektrische Generatoren (2) umfasst.

8. System nach einem der Ansprüche 1 bis 7, **dadurch gekennzeichnet, dass** mindestens eine der Leistungsvorrichtungen (200), insbesondere dank mindestens eines Gleichstrommotors (201), mit Gleichstrom arbeitet.

9. System nach einem der Ansprüche 1 bis 8, **dadurch gekennzeichnet, dass** mindestens eine elektrische Vorrichtung mit einem Wandler, insbesondere vom Typ AC/AC, assoziiert ist.

10. System nach Anspruch 9, **dadurch gekennzeichnet, dass** der Wandler das Ansteuern der assoziierten elektrischen Vorrichtung, insbesondere durch Regeln der Versorgung der Vorrichtung, insbesondere mittels einer Gondelsteuerungs- (4) und/oder Flugzeugsteuerungseinheit (5) ermöglicht.

11. System nach einem der Ansprüche 1 bis 10, **dadurch gekennzeichnet, dass** der Generator (2) von mindestens einer elektrischen Steuerungseinheit der Gondel (4) angesteuert wird.

12. System nach einem der Ansprüche 1 bis 11, **dadurch gekennzeichnet, dass** der elektrische Generator (2) mithilfe von Überwachungssignalen (12, 9), die von den versorgten elektrischen Vorrichtungen stammen, insbesondere mittels der Steuerungseinheit der Gondel (4) angesteuert werden kann.

13. System nach einem der Ansprüche 1 bis 12, **dadurch gekennzeichnet, dass** die elektrische Versorgungsschaltung (1) mindestens einen elektrischen Schalter (7a, 7b) umfasst, der von einer Steuerungseinheit (300, 4), insbesondere einer Flugzeugsteuerungseinheit, gesteuert werden kann.

## Claims

1. A system for a turbojet engine nacelle, comprising an electric power supply circuit (1), a first electric power device other than a monitoring or supervising unit and at least one second electric power device other than a monitoring or supervising unit, the electric power supply circuit (1) comprising at least one electric generator (2) mechanically linked to a shaft of the turbojet engine, said generator electrically and directly powering the first electric power device and said generator directly and electrically powering the at least one second electric power device, and one amongst the electric power devices being a thrust reverser device (200), **characterized in that** the thrust reverser device (200) comprises an electrodynamic braking output line adapted to at least partially power another electric device.

2. The system according to claim 1, **characterized in that** one amongst the electric power devices is an electric deicing device (100).

3. The system according to claim 1 or 2, **characterized in that** one amongst the electric power devices is a variable nozzle device.

4. The system according to any one of claims 1 to 3, **characterized in that** the electric generator (2) is of the generator / starter type.

5. The system according to claim 4, **characterized in that** the electric generator (2) in the starter mode is adapted to be powered by a return line of one of the electric devices.

6. The system according to any one of claims 1 to 5, **characterized in that** the generator (2) is located at the level of an accessory box (3) of the turbojet engine.

7. The system according to any one of claims 1 to 6, **characterized in that** the electric power supply circuit (1) comprises at least two electric generators (2), in particular for safety reasons.

8. The system according to any one of claims 1 to 7, **characterized in that** at least one of the power devices (200) operates in direct current, in particular thanks to at least one direct current motor (201).

9. The system according to any one of claims 1 to 8, **characterized in that** at least one electric device is associated with a converter, in particular of the AC-AC type.

10. The system according to claim 9, **characterized in that** the converter enables piloting of the associated electric device, in particular by regulating the power supply of the device, in particular via a nacelle monitoring (4) and/or aircraft monitoring (5) unit(s).

11. The system according to any one of claims 1 to 10, **characterized in that** the generator (2) is piloted by at least one electric monitoring unit of the nacelle (4).

12. The system according to any one of claims 1 to 11, **characterized in that** the electric generator (2) is adapted to be piloted using supervising signals (12, 9) originating from the powered electric devices, in particular via the monitoring unit of the nacelle (4).

13. The system according to any one of claims 1 to 12, **characterized in that** the electric power supply circuit (1) includes at least one electrical switch (7a, 7b) adapted to be controlled by a monitoring unit (300, 4), in particular an aircraft monitoring unit.
